# EUROPÄISCHE PATENTANMELDUNG

(11) **EP 4 249 762 A1**
(43) Veröffentlichungstag der Anmeldung: **27.09.2023**
(21) Anmeldenummer: 22163250.8
(22) Anmeldetag: 21.03.2022
(51) Int. Cl.: F16D 3/60, F16D 11/14

(54) **ZUGMITTELKUPPLUNG ZUR AXIALEN ANBINDUNG VON WELLEN- ODER GETRIEBEKOMPONENTEN, TRIEBSTRANGANORDNUNG MIT EINER SOLCHEN ZUGMITTELKUPPLUNG INSBESONDERE FÜR INDUSTRIEGETRIEBE SOWIE ENTSPRECHENDES ZUGMITTELBASIERTES ABSTÜTZVERFAHREN UND VERWENDUNG**

(71) Anmelder: Flender GmbH, 46395 Bocholt (DE)
(72) Erfinder: HAMBRECHT, Ralf, 46395 Bocholt (DE)
(74) Vertreter: Michalski Hüttermann & Partner Patentanwälte mbB

(57) **Zusammenfassung**

Die vorliegende Erfindung betrifft eine Zugmittelkupplung zur axialen Anbindung von Wellen- oder Getriebekomponenten, aufweisend eine erste Kupplungskomponente und eine zweite Kupplungskomponente und eine Zug-Momentenabstützung umfassend wenigstens ein die erste und zweite Kupplungskomponente miteinander kuppelndes Zugmittel; die Erfindung stellt eine zwischen den Wellen- oder Getriebekomponenten wirkende Zug-Momentenabstützung bereit, welche eingerichtet ist, zumindest einem zwischen den Kupplungskomponenten um die axiale Erstreckung der Kupplungskomponenten wirkenden Drehmoment zugmittelbasiert entgegenzuwirken. Dies liefert nicht zuletzt auch eine vorteilhafte Variabilität beispielsweise hinsichtlich zahlreicher funktioneller Optionen, die vergleichsweise einfach und anwendungsspezifisch implementierbar sind. Die vorliegende Erfindung betrifft ferner ein entsprechendes zugmittelbasiertes Abstützverfahren sowie entsprechende Verwendungen.

## Beschreibung

### TECHNISCHES GEBIET

Die vorliegende Erfindung betrifft eine Zugmittelkupplung zur axialen Anbindung von Wellen- oder Getriebekomponenten, aufweisend eine erste Kupplungskomponente und eine zweite Kupplungskomponente und eine Zug-Momentenabstützung umfassend wenigstens ein die erste und zweite Kupplungskomponente miteinander kuppelndes Zugmittel; die Erfindung stellt eine zwischen den Wellen- oder Getriebekomponenten wirkende Zug-Momentenabstützung bereit, welche eingerichtet ist, zumindest einem zwischen den Kupplungskomponenten um die axiale Erstreckung der Kupplungskomponenten wirkenden Drehmoment zugmittelbasiert entgegenzuwirken. Die vorliegende Erfindung betrifft ferner ein entsprechendes zugmittelbasiertes Abstützverfahren sowie entsprechende Verwendungen.

### HINTERGRUND DER ERFINDUNG

Beim axialen Kuppeln von Komponenten wie z.B. zwei Wellen eines Triebstrangs ist bei vielen Anwendungen eine gewisse Lage- bzw. Bewegungstoleranz erwünscht. Insbesondere bei Triebsträngen, in denen zwei Wellen oder eine Welle mit einem Getriebe verbunden werden sollen und ein Winkelversatz nicht ausgeschlossen oder nur mit hohem Zusatzaufwand vermieden werden kann, entstehen beim Verbinden mittels einer steifen Kupplung hohe Zusatzlasten insbesondere auch in Form von Biegemomenten. In hochbelasteten Strukturen wie z.B. bei Windenergieanlagen kommt es auch durch Windlasten auf den Rotor zu unterschiedlich starken Verformungen sowohl der Tragstruktur (insbesondere Rotorlagergehäuse, Maschinenträger, Azimut-Lager, Turmkopfsegment, oder dergleichen) als auch des mechanischen Triebstrangs (Rotorwelle, Rotorwellenlager, Getriebeplanetenträger, Getriebe-Drehmomentstütze sofern vorgesehen). Durch betragsmäßig unterschiedlichen Verformungen oder durch unterschiedliche Verformungsarten werden vergleichsweise große Zwangskräfte in der Triebstranganbindungen des Getriebes generiert, welche die Anschlusskomponenten und die inneren (Getriebe-)Komponenten zusätzlich belasten und zu einer verkürzten Lebensdauer oder gar zum Bruch führen.

Bei vielen Triebstrang-Anwendungen ist es erforderlich, einen guten Kompromiss unter widerstreitenden Anforderungen zu finden und insbesondere auch mittels Kupplungskomponenten zu realisieren. Beispielsweise für das Regelverhalten einer Windenergieanlage ist eine relativ steife Anbindung der drehmomentübertragenden Komponenten wünschenswert, während insbesondere zur Kompensation der unterschiedlichen Verformungen der Tragstruktur und des Triebstrangs eine eher weiche Anbindung vorteilhaft sein kann. Im Gegenzug führt eine direkte und feste Ankopplung einer Welle, z.B. einer Rotorwelle, an ein Getriebe, z.B. an den Planetenträger eines Planetengetriebes, zu einer nahezu ungedämpften Weiterleitung der Anregungsfrequenzen aus dem Getriebe in die (Rotor-)Welle, was Schwingungs- und Schallprobleme verursachen kann; diese Problematik kann speziell bei Windenergieanlagen bis zum Entzug der Betriebserlaubnis führen, ist also für einen Anlagenbetreiber von hoher Relevanz.

Insbesondere bei Planetengetrieben, beispielsweise auch solchen für Windkraftanlagen wie auch für Industrieanwendungen, wird zur Verbindung mit der Welle (bzw. zur Kopplung bzw. als Kupplung an die Welle) häufig eine Flansch- oder Schrumpfscheibenverbindung gewählt. Diese Art der Anbindung führt jedoch insbesondere bei Nick- und Gierbewegungen potentiell zu spürbaren Zusatzbelastungen der Getriebe- (Rotor-)Wellenverbindung sowie der Getriebelager (insbesondere der Planetenträgerlager), insbesondere wenn eine starre Anbindung des Getriebegehäuses an das Rotorlager vorliegt oder eine/die Drehmomentabstützung gegenüber dem Maschinenträger (Basis) diese Bewegungen nicht lastfrei ausgleichen kann (was sehr häufig der Fall ist). Bei einer Flanschanbindung zwischen Getriebe (Planetenträger, Sonnenwelle, Innenverzahnung Hohlrad bzw. allgemein Ein- und/oder Ausgangswelle des Getriebes) und (Rotor-)Welle muss üblicherweise auch eine statische Überbestimmung vermieden werden oder eine sehr aufwändige Verformungsbetrachtung in der Getriebeauslegung berücksichtigt werden.

Beispielsweise kommt in Windkraftanlagen zwecks Entkopplung von Biegemomenten auf der langsamen antreibenden Seite des Getriebes bisher eine vergleichsweise aufwändige Faserverbund-Membrankupplung oder wenigstens eine Lamellenkupplung zum Einsatz. Bei den bisher eingesetzten oder verfügbaren Technologien führen jedoch Material und/oder Design bzw. Konstruktion zu relativ steifen Anbindungen insbesondere in Biegerichtung. Dadurch treten vergleichsweise hohe verformungs- und steifigkeitsabhängige Kräfte auf, die in den Bauteilen bei der Auslegung mit berücksichtigt werden müssen und dadurch größere, schwerere und nicht zuletzt auch teurere Anschlussbauteile erfordern. Durch die Komplexität der Belastungsabhängigkeiten in vielen Triebsträngen, beispielsweise bei Windenergieanlagen die Abhängigkeiten zwischen Windlasten, Strukturverformung, Steifigkeit und Dynamik, bleiben die einzelnen Lasten bzw. Belastungsarten jedoch bei der Auslegung bzw. im Produktentwicklungsprozess zum Teil unberücksichtigt; dies kann im Betrieb zu unerwartet hohen Zusatzlasten führen, die sich in reduzierter Zuverlässigkeit und verringerter Leistungsfähigkeit niederschlagen. Auch in diesem Zusammenhang besteht Bedarf an einem effizienteren und möglichst auch allgemein für ganz unterschiedliche Triebstränge implementierbaren Design-Ansatz.

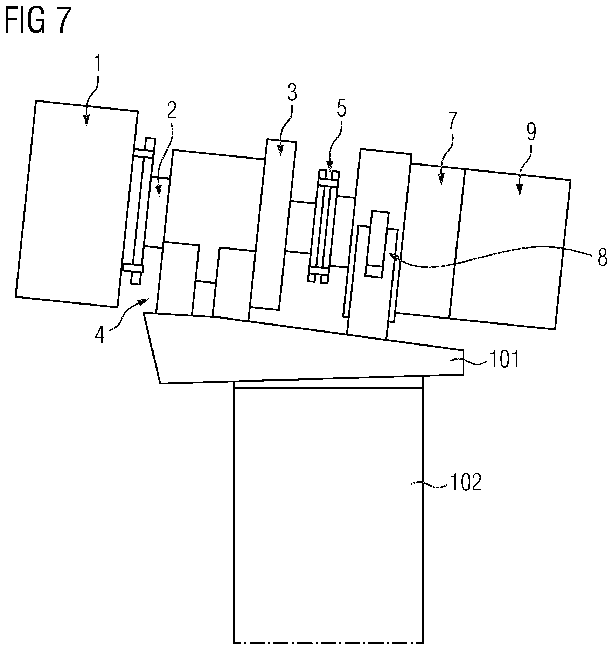

In der Figur 7 wird ein Triebstrang einer Windenergieanlage beschrieben, bei welchem die Rotorwelle und das Getriebe mittels einer weitgehend starren Kupplung miteinander verbunden sind, wobei das Getriebe sowie ein daran abgestützter Generator nach unten zum Maschinenträger abgestützt sind. Auch bei einer derartigen Anordnung entstehen vergleichsweise hohe nachteilige Belastungen im Triebstrang und auch in der Abstützstruktur zum Maschinenträger. Auch davon ausgehend besteht Interesse an einer vorteilhafteren Kupplung/Kopplung der Komponenten des Triebstrangs. Dabei soll je nach räumlicher Ausrichtung des Triebstrangs bevorzugt auch (optional zusätzlich) eine vergleichsweise große Gewichtskraft bzw. eine vergleichsweise große Hangabtriebskraft kompensiert werden können, optional auch in Verbindung mit einer zusätzlichen und belastungstechnisch möglichst auch für den gesamten Triebstrang vorteilhaften Kompensation von Kippmomenten.

### ZUSAMMENFASSUNG DER ERFINDUNG

Es ist Aufgabe der vorliegenden Erfindung, Maßnahmen aufzuzeigen, die eine vorteilhafte axialfluchtende Kupplung/Kopplung von Komponenten des Triebstrangs hinsichtlich des zu übertragenden Drehmoments ermöglichen, beispielsweise von (Rotor-)Welle und Getriebekomponente wie z.B. einer Ein-Ausgangswelle des Getriebes oder z.B. eines Planententrägers. Insbesondere besteht die Aufgabe auch darin, die Kupplung/Kopplung der Triebstrangkomponenten derart zu realisieren, dass auch eine besonders vorteilhafte und variable/variierbare/adaptierbare Drehmomentabstützung bzw. Momentenabstützung im Allgemeinen sichergestellt werden kann, insbesondere an einer axialen Schnittstelle zwischen (Rotor-)Welle und Getriebekomponente eines Planetengetriebes zwecks möglichst umfassendem Abfangen und Weitergeleiten der wirkenden Kräfte und Momente bzw. Belastungen.

Die Lösung der Aufgabe erfolgt durch eine Zugmittelkupplung mit den Merkmalen des Anspruchs 1, durch eine Triebstranganordnung mit den Merkmalen des nebengeordneten Vorrichtungsanspruchs sowie durch Verfahren und Verwendungen gemäß den Merkmalen des jeweiligen nebengeordneten Verfahrens-/Verwendungsanspruchs. Bevorzugte Ausgestaltungen sind in den Unteransprüchen und in der nachfolgenden Beschreibung angegeben, die jeweils einzeln oder in Kombination miteinander einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine zugmittelbasierte Drehmomentübertragung rotierender Triebstrangkomponenten. Bereitgestellt wird insofern eine Zugmittelkupplung zur axialen, insbesondere axial fluchtenden Anbindung einer Getriebekomponente an eine Welle, beispielsweise an eine mit einem Rotor gekuppelte Welle in einem Triebstrang einer Windenergieanlage, oder zum axialen Kuppeln von zwei Wellen oder Triebsträngen z.B. auf einem Prüfstand, wobei die Zugmittelkupplung aufweist: eine erste Kupplungskomponente, insbesondere seitens eines/des Rotors bzw. seitens einer/der Welle; eine zweite Kupplungskomponente, insbesondere seitens einer/der Getriebekomponente (insbesondere Planetenträger oder Getriebeeingangswelle); eine Zug-Momentenabstützung umfassend wenigstens ein die erste und zweite Kupplungskomponente miteinander kuppelndes Zugmittel, wobei die Zug-Momentenabstützung eingerichtet ist, zumindest einem zwischen den Kupplungskomponenten um die axiale Erstreckung der Kupplungskomponenten wirkenden Drehmoment zugmittelbasiert entgegenzuwirken. Dies liefert einerseits einen vorteilhaften Entkopplungsgrad, andererseits auch eine insbesondere durch Vorspannkräfte in den Zugmitteln definierbare Art und Weise der Kopplung, die sich positiv auf ein ruhiges und belastungsminimiertes Betriebsverhalten auswirkt; dabei kann auch eine große Flexibilität und Variabilität hinsichtlich anwendungsspezifischer Individualisierbarkeit und funktionaler Erweiterbarkeit sichergestellt werden.

Erfindungsgemäß wird insofern auch vorgeschlagen, mittels des/der Zugmittel einerseits eine gewisse (Lage-)Toleranz sicherzustellen, andererseits auch eine gewisse Dämpfung und Schwingungsentkopplung realisieren zu können, was sich beispielsweise auch im Zusammenhang mit sehr dynamischen Belastungen und sehr wuchtigen Triebstrangkomponenten als vorteilhaft erweist. Beispielsweise ist die Zugmittelkupplung einerseits an einer rotierenden Welle und andererseits an einer rotierenden Getriebekomponente (z.B. Planetenträger oder Getriebeeingangswelle oder Getriebeausgangswelle) vorgesehen.

Als Kupplungskomponente ist hier insbesondere diejenige Komponente der Zugmittelkupplung zu verstehen, welche mittels der Zugmittel kuppelt, insbesondere in Ausgestaltung als geometrisch korrespondierender Kupplungspartner (hier: erste und zweite Kupplungskomponente, beispielsweise jeweils mit in Umfangsrichtung relativ zueinander versetzt angeordneten axial überlappenden korrespondierenden Zapfen zur Anordnung/Befestigung des Zugmittels oder der einzelnen Zugmittel). Sofern gemäß der vorliegenden Offenbarung von Kupplungspartner gesprochen wird, so ist dieser Begriff hier synonym zum Begriff Kupplungskomponente zu verstehen.

Gemäß der vorliegenden Offenbarung wird auf eine Zug-Momentenabstützung Bezug genommen. Sofern nicht anders konkretisiert, wird damit vorliegend zumindest die Abstützung eines um die Längserstreckung des Triebstrangs wirkenden Drehmoments bezeichnet (wahlweise ausschließliche Realisierung einer Abstützung dieses Drehmoments), und ferner kann je nach Anwendungsfall auch eine zusätzliche Abstützung von gravitationskraftbegründeten Kräften (insbesondere Hangabtriebskraäften) und/oder Momenten (beispielsweise auch Kippmomenten) durch diesen Begriff bezeichnet sein. Der Fachmann kann je nach Anwendungsfall individuell entscheiden, ob speziell nur eine Drehmomentabstützung gewünscht wird oder ob auch allgemeine Aufnahme und Weiterleitung von axialen (Hangabtriebs-)kräften und/oder weiteren um andere Achsen als die axiale Achse wirkenden Momenten funktional in die Zugmittelkupplung implementiert sein soll; auch insofern sind die einzelnen diesbezüglich hier beschriebenen Maßnahmen und Merkmale miteinander kombinierbar.

Personifizierte Begriffe, soweit sie hier nicht im Neutrum formuliert sind, können im Rahmen der vorliegenden Offenbarung alle Geschlechter betreffen. Etwaige hier verwendete englischsprachige Ausdrücke oder Abkürzungen sind jeweils branchenübliche Fachausdrücke und sind dem Fachmann in englischer Sprache geläufig. Etwaige dazu oder anderweitig synonym verwendete/verwendbare deutschsprachige Begriffe können hier der Vollständigkeit halber in (Klammern) angegeben werden, oder vice versa.

Bei bisherigen Getrieben und Triebsträngen war z.B. eine Schwingungsentkopplung nicht auf einfache Weise oder zumindest nicht in der gewünschten Art und Weise insbesondere für die hier beschriebenen Anwendungen möglich. Hingegen gemäß der Erfindung wird die Erkenntnis genutzt, dass zugmittelbasiert einerseits die gewünschte Entkopplung sichergestellt werden kann, andererseits auch eine gewisse Steifigkeit und Vorspannung zumindest in Umfangsrichtung und wahlweise auch in axialer Richtung realisiert werden kann. Dabei kann das erfindungsgemäße Konzept vergleichsweise einfach skaliert und individualisiert werden.

Sofern gemäß der vorliegenden Offenbarung bezüglich des Triebstrangs oder einer Rotation der Kupplungskomponenten auf eine axiale Richtung abgestellt wird, so bezieht sich dies auf die bestimmungsgemäße axiale Ausrichtung des Triebstrangs, insbesondere auf eine axial fluchtende Ausrichtung, bei welcher die Mittenlängsachse des Triebstrangs bzw. die Drehachse der jeweiligen Getriebekomponente und der Leistungswelle in zumindest annähernd horizontaler Richtung, also orthogonal zur Schwerkraftrichtung, ausgerichtet sind, oder beispielsweise auch in einer kleinen Neigung von z.B. 10-20° relativ zur Horizontalebene.

Besonders vorteilhaft wird die Zugmittelkupplung mit einer zwischen statischen (nicht rotierenden) Strukturen vorgesehenen Abstützung kombiniert, z.B. indem das Getriebegehäuse am (Rotor-)Wellenlagergehäuse abgestützt wird. Die Zugmittelkupplung ist dann beispielsweise in einem von einer entsprechenden statischen Abstützstruktur definierten Axialabschnitt vorgesehen. Durch diese zusätzliche Abstützung kann das erfindungsgemäße Kupplungskonzept auch für sehr wuchtige und dynamischen Belastungen unterliegenden Triebsträngen auf besonders vorteilhafte Weise implementiert werden, insbesondere indem Kippmomente bzw. Umlaufbiegemomente über das (Rotor-)Wellenlagergehäuse abgeleitet werden.

Es hat sich gezeigt, dass die vorliegende Erfindung insbesondere auch im Zusammenhang mit Triebsträngen für Windenergieanlagen, Windgetrieben, Industrieanwendungen für Wellenkupplungen im Allgemeinen, Kupplungen im Allgemeinen, Industriegetriebe-Ankopplungen im Allgemeinen, und/oder Getriebe-Generator-Kombinationen im Allgemeinen (so genannte Hybrid-Triebstränge/- Antriebe) implementierbar ist.

Es hat sich auch gezeigt, dass die vorliegende Erfindung eine größere Variabilität und auch eine leichtere Kombinierbarkeit unterschiedlicher belastungsmindernder Maßnahmen für vergleichsweise stark beanspruchte Triebstränge ermöglicht. Insbesondere bei einer integrierten bzw. hybriden Getriebe-Generatorkombination, insbesondere bei einem Antriebsstrang für Windkraftanlagen, kann die Gewichtskraft des Getriebes und eines am Getriebegehäuse angeflanschten Generators über eine feste Flanschverbindung am Rotorlagergehäuse und/oder über eine Befestigung bzw. Abstützung am Maschinenträger aufgenommen werden, und eine Kupplung an der (Rotor-)Welle kann die zyklischen Belastungen der Welle, des Planetenträgers (insbesondere einer ersten Getriebestufe), dessen Planetenträgerlager und der Flanschverbindungen zur (Rotor-)Welle zumindest teilweise kompensieren. In den rotierenden Elementen entsteht dadurch keine spürbare Umlaufbiegung, welche in der Dimensionierung mit berücksichtigt werden müsste.

Durch die hier beschriebene Zugmittelkupplung zwischen Getriebe und (Rotor-)Welle kann sowohl eine relative steife Anbindung in Drehmomentvorzugsrichtung erzeugt werden als auch eine angepasste Steifigkeit für die reversierende Drehrichtung eingestellt werden, und ferner kann auf einfache Weise auch eine Anordnung mit auf ein Minimum reduzierter Beanspruchung resultierend aus etwaigen Nick- und Gierbewegungen und/oder resultierend aus Fertigungsabweichungen für die angebundenen Komponenten sichergestellt werden. Darüber hinaus kann auch eine Gewichtskraftentlastung bezüglich eines/des Getriebes bzw. einer Getriebe-/Generatorkombination entsprechend einer Hangabtriebskraft entlang der Wellenachse bzw. Triebstrangausrichtung realisiert werden, insbesondere mittels wenigstens einer mitrotierenden Vorspanneinrichtung.

Durch eine Anbindung des (Planeten-)Getriebes beispielsweise einer Windenergieanlage über die Zugmittelkupplung zur Rotorwelle (Lagerung des Windenergieanlagen-Rotors) kann einerseits das vom Triebstrang bestimmungsgemäß zu übertragende Drehmoment mit einer vergleichsweise einfach und variabel einstellbaren Steifigkeit an das Getriebe übertragen werden, und andererseits können Ausrichtfehler, Winkelfehler, Fertigungsabweichungen der Wellenanbindung (und wahlweise auch einer Gehäuseanbindung) ohne spürbar für das Getriebe relevante Zusatzlasten ausgeglichen werden. Dies gilt insbesondere auch für weniger integrierte, so genannte aufgelöste Triebstrangkonzepten (vergleiche z.B. Fig. 7), insbesondere für den Fall dass das erste Gehäuse und das zweite Gehäuse konstruktiv nicht zentrisch zueinander ausgerichtet sind oder an jeweils unterschiedlichen Strukturkomponenten bzw. unterschiedlichen Stellen einer Basiskomponente (z.B. Maschinenträger) befestigt sind und damit die zu verbindenden Wellen unterschiedliche Ausrichtung und (beispielsweise windlastabhängige) Verformungen erfahren. Die hier beschriebene vergleichsweise biegeweich auszugestaltende Zugmittel-Ankopplung kann auch in derartigen Konstellationen besonders vorteilhaft eingesetzt werden. Optional kann durch zusätzlichen Einsatz einer oder mehrerer ähnlich ausgeführter, beispielsweise 90° in Umfangsrichtung versetzt angeordneter Vorspanneinrichtungen (bzw. einzelner Vorspannelemente insbesondere auch mit Zugmittel), insbesondere jeweils in Ausgestaltung als axiale Zugmittelkopplungen, eine zugmittelbasierte Eigengewichtsentlastung der rotierenden, angekoppelten Bauteile bzw. Kupplungspartner erfolgen. Insofern wird gemäß der vorliegenden Offenbarung auch der Begriff Zug-Momentenabstützung gewählt, welcher unterstreicht, dass nicht nur eine zugmittelbasierte Zug-Drehmomentabstützung realisierbar ist, sondern optional auch Gewichts- und Hangabtriebskräfte (je nach räumlicher Ausrichtung des Triebstrangs zumindest anteilig, wahlweise vollständig) und wahlweise auch Kipp- und Umlaufbiegemomente zumindest teilweise zugmittelbasiert abgestützt werden können. Eine solche zusätzliche Zugmittel-Gewichtsentlastung ist dabei bevorzugt elastisch ausgestaltet, insbesondere mit flacher Federkennlinie, insbesondere um eine gute Wirkung der in Radialebenen ausgerichteten Zugmittel zu ermöglichen. Das Ausgleichen von Ausrichtfehlern, Winkelfehlern, Fertigungsabweichungen bezüglich Gehäuse(n) und/oder Wellenanbindung(en) ohne relevante Zusatzlasten auf das Getriebe kann bevorzugt durch den Einsatz von riemen-, band- oder seilartigen Strukturen (hier allgemein als Zugmittel beschrieben) realisiert werden, wobei diese Zugmittel im Wesentlichen nur Zugkräfte aufnehmen und kaum bis keine Biege- /Verdrehmomente aufnehmen bzw. übertragen können. Bevorzugt sind dabei unterschiedliche Steifigkeiten in Vorzugs- oder Reversierrichtung implementiert, insbesondere basierend auf einer entsprechenden Auswahl des Zugmittelmaterials, der Länge der Zugmittel bzw. der von Endlos-Zugmitteln gebildeten Schlaufen, einer Vordehnung/Vorspannung, oder auch einer Anzahl von mehreren Lagen übereinander liegender Zugmittel (insbesondere flache Zugmittel in Ausgestaltung als Bänder oder Riemen), oder auch der Breite und/oder Durchmesser der Zugmittel. Die Zugmittelkupplung wird vorteilhaft derart ausgeführt, dass das zu übertragende Drehmoment an mehreren Stellen über dem Umfang und/oder an mehreren Stellen am Durchmesser verteilt mittels an axial überlappenden Zapfen/Klauen oder dergleichen bevorzugt integral einstückiger axialer Ausläufer umfänglich angreifenden Zugmitteln zwischen einer (Rotor-)Welle und einer Getriebeeingangs-/ausgangswelle oder allgemein zwischen gekoppelten Wellen übertragen wird. Beispielsweise sind je Kupplungspartner wenigstens vier solcher axialer Ausläufer vorgesehen, und bevorzugt sind wenigstens zwei unterschiedliche Arten von Zugmitteln für unterschiedliche Wirkungsrichtungen in entsprechender Anzahl vorgesehen (jeweils bevorzugt wenigstens vier). Das jeweilige Zugmittel verbindet z.B. jeweils Getriebezapfen mit Rotorwellenzapfen und stellt damit eine Zugkraftverbindung mit einstellbarer Steifigkeit bereit, insbesondere basierend auf einer je Anwendungsfall leicht individualisierbaren Breite, Anzahl und Material des jeweiligen Zugmitteltyps. Durch vorteilhafte Verbindung eines jeweiligen Kupplungszapfens in zwei unterschiedliche Wirk-Richtungen, also mit wenigstens zwei unterschiedlichen Zugmitteltypen, kann die Steifigkeitscharakteristik an die jeweilige WirkungsRichtung angepasst werden und auch eine gewisse Abstütz-Vorspannung eingebracht werden, was sich positiv auf das Betriebsverhalten auch bei sehr dynamischen Belastungszuständen auswirkt.

Beispielsweise kann der Triebstrang durch ein oder mehrere Elemente (Zapfen/Klauen), die versetzt angeordnet sind, z.B. um 90° verdreht, über die Zugmittelverbindungen vorgespannt werden, insbesondere derart, dass auch Gewichtskräfte entlang einer Hangabtriebskraftachse (Wirkungsachse) durch Aufnahme von dadurch begründeten Zugkräften kompensiert werden können. Darüber hinaus kann durch diese Art der Kopplung optional auch (zusätzlich) eine drehmomentabhängige Anpresskraft zwischen den Kupplungspartnern (insbesondere Rotorwelle und Getriebewelle) erzeugt werden, insbesondere auch im Sinne einer schaltfähigen Kupplung. Ebenso kann eine optional implementierbare Axialbewegung bzw. ein durch die Kupplungspartner tolerierter Axialhub dazu genutzt werden, eine richtungsabhängige Schaltfunktionalität bzw. einen Überlastschutz bereitzustellen. Die Zugmittelkupplung kann z.B. auch in Prüfstandskonzepten insbesondere gemäß dem so genannten "back to back"-Prinzip zum Einsatz kommen und dort Ausrichtfehler oder Winkelversätze ausgleichen, ohne unbeabsichtigt hohe Biegelasten in die Prüflinge bzw. Kupplungskomponenten einzuleiten (z.B. Triebstrang einer Windkraftanlage, oder Getriebe-/Generatorkombination).

Eine erfindungsgemäße Zugmittelkupplung, beispielsweise in einer Anordnung zwischen Getriebe und (Rotor-)Welle, ist eingerichtet, einerseits hohe Drehmomente zu übertragen und andererseits durch eine gewisse "Weichheit" bzw. Nachgiebigkeit oder Elastizität oder Lagetoleranzausgleichskapazität der Zugmittel gegenüber Verwindung bzw. Verdrillung auch eine gewisse Entkopplung zu ermöglichen, insbesondere dahingehend dass nur minimal Rückstellkräfte erzeugt werden, z.B. beim Ausgleich von Winkelfehlern, beispielsweise falls die zu verbindenden
Wellen nicht exakt fluchtend zueinander angeordnet sind. Im Vergleich zu bisher üblicherweise in Kupplungen eingesetzten Verbindungselementen (insbesondere Elastomerlager, Faserverbundmembranen, Metalllamellen und dergleichen) entstehen dank der erfindungsgemäßen Zugmittelkupplung weniger Zwangskräfte aufgrund von Fehlausrichtung oder Fertigungsabweichungen der Wellenanschlüsse oder auch der Gehäuse (sofern diese aneinander abgestützt werden sollen) und daher können deutlich geringere Zusatzlasten sichergestellt werden. Im Gegensatz dazu ist bei Verwendung von Schrumpfscheiben- oder Flanschanbindungen gemäß dem Stand der Technik, im Sinne einer direkten Ankopplung, keine einfache bzw. keine effektive Schwingungsentkopplung realisierbar; zudem sind üblicherweise entweder zahlreiche Schraubverbindungen erforderlich, um das abzustützende Drehmoment reibschlüssig übertragen zu können, oder es ist eine aufwändige Kombination mit Formschluss vorzusehen.

Die vorliegende Erfindung kann auch durch die vorliegenden Zeichnungsfiguren näher erläutert werden, insbesondere betreffend eine vorteilhafte Art und Weise einer Anbindung einer Welle an ein Getriebe, wie z.B. eine Rotorwelle zu einem Getriebe einer Windenergieanlage, oder allgemein bei aneinander gekoppelten Wellen. Figur 7 bezieht sich zum Vergleich auf einen Triebstrang gemäß dem Stand der Technik.

Gemäß einem Ausführungsbeispiel ist die Zug-Momentenabstützung zur Weiterleitung der auf die Kupplungskomponenten ausgeübten (Reaktions-)Kräfte mittels des wenigstens einen kuppelnden Zugmittels einerseits an der ersten Kupplungskomponente (bzw. an der entsprechenden damit verbundenen rotierenden Komponente/Welle) und andererseits an der zweiten Kupplungskomponente und einer/der entsprechend rotierenden Getriebekomponente abgestützt, insbesondere in beiden Umfangsrichtungen und wahlweise auch zumindest anteilig auch in radialer Richtung. Dies begünstigt auch eine sehr ruhige Abstützung insbesondere in Verbindung mit einer bidirektionale Vorspannung zumindest in Umfangsrichtung. Ein entsprechender vom jeweiligen Zugmittel ausgehender Kraftvektor verläuft zwischen den korrespondierenden Zapfen oder dergleichen axial überlappenden Fortsätzen der beiden Kupplungskomponenten.

Gemäß einem Ausführungsbeispiel umfasst die Zug-Momentenabstützung eine Mehrzahl von Zugmitteln, welche zwischen Zapfen oder dergleichen hervorgestehenden Abschnitten der ersten Kupplungskomponente und zwischen Zapfen oder dergleichen hervorgestehenden Abschnitten der zweiten Kupplungskomponente vorgesehen sind, insbesondere schlaufenartig zwischen jeweils paarweise korrespondierenden Zapfen der ersten und zweiten Kupplungskomponente, insbesondere jeweils in Ausgestaltung als vollständig umlaufendes Endlos-Zugmittel, insbesondere mit dem jeweiligen Zapfen in Anbindung an wenigstens zwei Zugmittel in wenigstens zwei unterschiedlichen Richtungen. Dies liefert auch eine einfache und robuste Befestigungsmöglichkeit, insbesondere bei vorteilhaft großer Reibschlussfläche (Haftreibung).

Gemäß einem Ausführungsbeispiel kann die Zug-Momentenabstützung eine Mehrzahl von Zugmitteln umfassen, welche sich zumindest annähernd sowohl in einer ersten Zugmittelrichtung, insbesondere in der durch das eingangsseitig am Triebstrang wirkende Drehmoment definierten Betriebs-/Energieerzeugungsrichtung (Hauptrichtung), als auch in einer zweiten Zugmittelrichtung, insbesondere in Reversier-/Bremsbetriebsrichtung (Nebenrichtung) erstrecken. Dies begünstigt nicht zuletzt eine sehr ruhige Lagerung/Kupplung auch bei hohen mehrdimensionalen dynamischen Belastungen. Dabei wird jeweils auf die Wirkrichtung der Zugmittel Bezug genommen, wobei die jeweilige Wirkrichtung im jeweiligen Abschnitt des jeweiligen Zugmittels bevorzugt zumindest annähernd in Umfangsrichtung ausgerichtet ist.

Die Zug-Momentenabstützung kann eine Mehrzahl von ersten Zugmitteln umfassen, welche sich in einer ersten Zugkraftrichtung (Zugkrafthauptrichtung) entgegen einem ersten um die axiale Ausrichtung des Triebstrangs wirkenden Drehmoment erstrecken, wobei die Zug-Momentenabstützung bevorzugt eine Mehrzahl von zweiten Zugmitteln umfasst, welche sich in einer zweiten Zugkraftrichtung (Zugkraftgegenrichtung, Zugkraftnebenrichtung) entgegen einem zweiten um die axiale Ausrichtung des Triebstrangs wirkenden Drehmoment erstrecken, wobei das erste Drehmoment bei bestimmungsgemäßem Einsatz des Triebstrangs größer ist als das zweite Drehmoment, und wobei die ersten Zugmittel entsprechend dimensioniert sind (also größer oder robuster oder steifer sind als die zweiten Zugmittel).

Die erste und zweite Kupplungskomponente können in der Art einer Klauenkupplung ineinandergreifen, insbesondere mittels axial überlappender Zapfen oder dergleichen axial hervorstehender Abschnitte, an welchen die jeweiligen (ersten und/oder zweiten) Zugmittel angreifen.

Gemäß einem Ausführungsbeispiel greifen die erste und zweite Kupplungskomponente in der Art einer Klauenkupplung ineinander, insbesondere mittels axial überlappender Zapfen oder dergleichen axial hervorstehender Abschnitte, an welchen die jeweiligen Zugmittel angreifen. Dies begünstigt nicht zuletzt auch eine Skalierbarkeit, sei es bezüglich der absoluten Größe, sei es bezüglich Art und Anzahl der axial überlappenden Abschnitte.

Gemäß einem Ausführungsbeispiel ist die Weiterleitung der auf die Zug-Momentenabstützung um die Welle bzw. um die axiale Richtung ausgeübten Drehmomente und daraus entsprechend resultierender Reaktionskräfte ausschließlich zugmittelbasiert. Dies ermöglicht auch eine besonders effektive schwingungstechnische Entkopplung oder Dämpfung, insbesondere in Verbindung mit mehrdimensionaler Lage-/Winkeltoleranz.

Gemäß einem Ausführungsbeispiel weist die Zug-Momentenabstützung ferner wenigstens eine hinsichtlich der Vorspannkraft bevorzugt einstellbare Vorspanneinrichtung auf, die eingerichtet und angeordnet ist zum Aufbringen und Übertragen einer einem schwerkraftbegründeten Hangabtriebs- oder Kippmoment entgegenwirkender Aufrichtkraft zwischen den Kupplungspartnern (bzw. Kupplungskomponenten), insbesondere in einer Anordnung zwischen Außenmantelflächen des ersten und zweiten Kupplungspartners. Eine derartige zusätzlich zu den Zugmitteln jedoch in anderer Richtung bzw. um eine andere (Raum-)Achse wirkende Vorspanneinrichtung liefert auch den Vorteil einer effektiven Entlastung der in Umfangsrichtung wirkenden Zugmittel, insbesondere derart dass letztere ausschließlich bzw. im Wesentlichen nur das eigentliche zu übertragende Drehmoment im Triebstrang koppeln müssen. Dies verhindert nicht zuletzt auch eine nachteilige Scherkraft/Scherbelastung in den Zugmitteln.

Gemäß einem Ausführungsbeispiel weist die Zug-Momentenabstützung eine/die wenigstens Vorspanneinrichtung auf, welche funktional von der Wirkung des wenigstens einen Zugmittels entkoppelt ist, insbesondere hinsichtlich der Wirkrichtung, insbesondere indem die Vorspanneinrichtung im Wesentlichen in axialer Richtung zwischen den Kupplungspartnern wirkt und das oder die Zugmittel im Wesentlichen nur in Umfangsrichtung und wahlweise auch in Radialrichtung zwischen den Kupplungspartnern wirkt/wirken. Diese funktionale Trennung ermöglicht nicht zuletzt auch eine Entlastung der für die eigentliche im Triebstrang erforderliche Drehmomentkopplung vorgesehenen Zugmittel hinsichtlich weiterer z.B. schwerkraftbegründeter Kräfte, wobei die Vorspanneinrichtung vorteilhaft auch im Sinne einer optionalen Nachrüstoption ergänzend (und gegebenenfalls nachträglich) vorgesehen werden kann, z.B. dann, wenn der Triebstrang in im Wesentlichen vertikaler Erstreckung ausgerichtet werden soll.

Gemäß einem Ausführungsbeispiel weist die Zug-Momentenabstützung eine/die wenigstens Vorspanneinrichtung umfassend wenigstens ein weiteres Zugmittel in im Wesentlichen axialer Ausrichtung auf. Dies begünstigt nicht zuletzt auch eine vorteilhafte Art und Weise der Interaktion der hier beschriebenen Zugmittelverbindungen bei Belastungen in mehreren Raumrichtungen bzw. um unterschiedliche Raumachsen. Insbesondere für eine Schalt- oder Anpresskraftfunktion, welche wahlweise ebenfalls mittels der wenigstens einen Vorspanneinrichtung implementierbar ist, ist eine vergleichsweise geringe Elastizität bevorzugt, also die Verwendung von vergleichsweise eher starren Zugmitteln mit möglichst eindeutig vordefinierbaren Versagenskräften bzw. Bruchlasten.

Sofern mittels der wenigstens einen Vorspanneinrichtung für einen jeweiligen Anwendungsfall auch eine Schalt- oder Anpresskraftfunktion implementiert werden soll, so kann eine Wirkungsweise der Vorspanneinrichtung(en) in der Art eines Bremskraftverstärkers vorgesehen sein, indem eine vordefinierbare Anpresskraft für zusätzlichen Reibschluss oder verbessertem Formschluss bereitgestellt wird, insbesondere ebenfalls zugmittelbasiert.

Gemäß einem Ausführungsbeispiel greift die Vorspanneinrichtung in einem oberen Umfangssegment am ersten und zweiten Kupplungspartner an und überträgt in diesem Bereich die Aufrichtkraft. Hierdurch kann auch eine gute Hebelwirkung ausgenutzt werden.

Gemäß einem Ausführungsbeispiel ist die Zugmittelkupplung eingerichtet zur Übertragung einer drehmomentabhängigen Anpresskraft zwischen den Kupplungspartnern, insbesondere mittels wenigstens einer in axialer Richtung zwischen den Kupplungspartnern vorgespannten/vorspannbaren Vorspanneinrichtung, insbesondere mittels mehrerer über den Umfang verteilter Vorspanneinrichtungen. Dies erweitert nicht zuletzt auch das Einsatzgebiet und den Funktionsumfang der Zugmittelkupplung.

Gemäß einem Ausführungsbeispiel umfasst die Zugmittelkupplung eine richtungsabhängige Schaltfunktionalität, welche durch in entgegengesetzten Umfangsrichtungen unterschiedliche Formgebung von Kontaktflächen der Kupplungspartner definiert ist, insbesondere mittels axialparalleler Kupplungsabschnitte und schräg im Winkel zur axialen Ausrichtung verlaufender Kupplungsabschnitt. Dies vereinfacht nicht zuletzt eine funktionale Ergänzung/Erweiterung in Hinblick auf zusätzliche sich potentiell kontaktierende Abschnitte der Kupplungspartner, beispielsweise für Anwendungen, bei welchen wenigstens zwei oder drei unterschiedliche Betriebszustände im Triebstrang bzw. hinsichtlich einer Drehmomentübertragung gefordert werden.

Gemäß einem Ausführungsbeispiel ist das wenigstens eine Zugmittel riemen-, band- oder seilartig ausgestaltet, beispielsweise als Keil- oder Zahnriemen oder Flachriemen. Diese Variabilität liefert weitere Freiheitsgrade für eine Individualisierung der Kupplung, wobei insbesondere eine Auswahl der Art des Zugmittels auch in Abhängigkeit von der Oberflächenbeschaffenheit der kuppelnden Abschnitte, der Wirkungsrichtung des jeweiligen Zugmittels und/oder der verfügbaren oder ausgewählten Kontaktfläche (Haftreibung, wahlweise auch Formschluss) bzw. deren absoluter Fläche und des radialen Abstandes (Hebelarm) erfolgen kann.

Gemäß einem Ausführungsbeispiel kommt das wenigstens eine Zugmittel zumindest kraft- /reibschlüssig und wahlweise auch formschlüssig an einer/der Mantelfläche von Zapfen oder dergleichen hervorstehenden Abschnitten des ersten und zweiten Kupplungspartners zur Anlage. Die Art und Weise des Kraftschlusses kann dabei auch in Abhängigkeit von einer Vorspannung des jeweiligen Zugmittels und der verfügbaren Kontaktfläche individualisiert werden. Insbesondere bei schlaufenartigem Umgreifen der Zapfen mittels Endlos-Zugmitteln ergibt sich eine hohe Systemsicherheit bei wenig/minimalem Schlupf bzw. minimierter Reibung. Dies entbehrt auch einer Notwendigkeit für Formschluss für viele Anwendungsgebiete und trägt zu einer einfachen Ausgestaltung bzw. Auslegung und Individualisierung bei.

Es hat sich gezeigt, dass ein Kraft-/Reibschluss an einer Außenmantelfläche der jeweiligen Kupplungskomponente die hier geforderten Anforderungen besonders zweckdienlich erfüllen kann; je nach Ausgestaltung der jeweiligen Außenmantelfläche kann der Fachmann eine geeignete bzw. im jeweiligen Anwendungsfall besonders adäquate Paarung von Zugmittel-Typ und Oberfläche (wahlweise auch formschlüssig) wählen und wahlweise auch eine entsprechend vorteilhafte Formgebung an der korrespondierenden Außenmantelfläche vorsehen.

Gemäß einem Ausführungsbeispiel ist mittels des wenigstens einen Zugmittels eine Schwingungsentkopplung zwischen erstem und zweitem Kupplungspartner (oder/bzw. zwischen Getriebekomponente und Lagerkomponente oder Welle) sichergestellt, insbesondere indem das wenigstens eine Zugmittel aus einem vergleichsweise stark dämpfenden Material wie z.B. Polyurethan oder einem sehr flexiblen und elastischen Material wie z.B. Polyamid oder aus einem hochfesten und dabei auch vergleichsweise elastischen Material z.B. auf Polyethylen-Basis ausgeführt ist.

Insbesondere bei großer Leistungsdichte eines Triebstrangs sind im Rahmen der vorliegenden Erfindung robuste und hochfeste Zugmittelmaterialien von Nutzen, z.B. Polymerfasern insbesondere in Form von multifibrillären (multifaserigen) Polyacrylnitrilfasern; oder es können Zugmittel bestehend aus oder basierend auf Aramid zum Einsatz kommen; oder Polyester-Verbund-Riemen oder hochfeste Chemiefaserverbünde aus Polyethylen wie z.B. synthetische Chemiefasern auf Polyethylen-Basis mit sehr hoher Molekülmasse (so genanntes Dyneema bzw. PE-UHMW).

Sofern eine messtechnische Überwachung oder Dokumentation und/oder ein aktives Steuern/Regeln von Betriebs-/Kupplungsparametern gewünscht ist, kann eine Kraft-Weg-Sensorik, bevorzugt zumindest eine Weg-Sensorik vorgesehen sein. Beispielsweise erfolgt eine Abstandsmessung hinsichtlich axial überlappender Zapfen bzw. deren Zapfenabstände in Vorzugsrichtung (Drehmomenthauptrichtung) und/oder in Nebenrichtung. Basierend auf einer Kraftmessung in Umfangsrichtung kann unter Einbezug der Steifigkeit und des Dehnungsweges (bzw. des Abstandes der axial überlappenden Zapfen in Umfangsrichtung) das Antriebsmoment bestimmt werden; insofern liefert die vorliegende Erfindung auch ein vorteilhaftes Messprinzip für eine Antriebsmomentmessung.

Ein Aspekt betrifft ferner eine vorteilhafte Kupplung und Lagerung und Abstützung in einer Triebstranganordnung insbesondere einer Windenergieanlage.

Die zuvor genannte Aufgabe wird insofern auch gelöst durch eine Triebstranganordnung mit einer zuvor weiter oben beschriebenen Zugmittelkupplung, eingerichtet für Industriegetriebe, insbesondere eingerichtet zur Anbindung eines Rotors einer Windenergieanlage, aufweisend: ein erstes Gehäuse, welches eine Lagerung für eine Welle des Triebstrangs umgibt, und eine/die insbesondere axial fluchtend an die Welle gekuppelte/gekoppelte Getriebekomponente, welche von einem zweiten Gehäuse umgeben ist, und die Zug-Momentenabstützung umfassend das wenigstens eine Zugmittel, wobei die Zug-Momentenabstützung ausschließlich an den gekuppelten rotierenden Komponenten abgestützt ist.

Unterhalb des zweiten Gehäuses und wahlweise auch unterhalb eines/des an das zweite Gehäuse gekuppelten Generators ist bevorzugt ein Freiraum vorgesehen, über welchem das zweite Gehäuse und gegebenenfalls auch ein/der daran gekuppelte Generator abstützfrei über einem/dem Maschinenträger frei im Raum angeordnet sind, insbesondere mit Bewegungsfreiheitsgrad zumindest nach unten. Die Abstützung des zweiten Gehäuses kann dabei, wie bereits zuvor weiter oben beschrieben, mittels eine/der Abstützstruktur am ersten Gehäuse erfolgen.

Die zuvor genannte Aufgabe wird insofern auch gelöst durch ein Industriegetriebe, insbesondere zum Abstützen von seitens einer Getriebekomponente um eine axial ausgerichtete Welle wirkenden Drehmomenten ausschließlich mittels wenigstens eines zwischen rotierender Welle und rotierender Getriebekomponente kuppelnden Zugmittels, mit einer zuvor weiter oben beschriebenen Triebstranganordnung oder mit einer zuvor weiter oben beschriebenen Zugmittelkupplung. Die zuvor genannte Aufgabe wird insofern auch gelöst durch eine Windenergieanlage mit einem solchen Industriegetriebe.

Die zuvor genannte Aufgabe wird insofern auch gelöst durch Verwendung der hier beschriebenen Zugmittelkupplung oder eines damit versehenen Triebstrangs in einer Windenergieanlage oder auf/in einem Prüfstand oder allgemein in einem Industriegetriebe.

Die zuvor genannte Aufgabe wird insofern auch gelöst durch ein Verfahren gemäß dem entsprechenden nebengeordneten Verfahrensanspruch, nämlich durch ein Verfahren zum Einstellen einer Drehmomentübertragung in einer Triebstranganordnung beispielsweise eines Industriegetriebes, wobei mittels einer Zugmittelkupplung eine erste Kupplungskomponente, insbesondere eine Welle des Triebstrangs, an eine zweite Kupplungskomponente, insbesondere an eine Planetengetriebekomponente drehmomentübertragend gekuppelt ist/wird, wobei mittels einer Zug-Momentenabstützung, welche einem auf die Kupplungskomponenten um deren axiale Erstreckung wirkenden Drehmoment entgegenwirkt, eine/die Drehmomentübertragung zwischen den Kupplungskomponenten zugmittelbasiert durch Aufnahme und Weiterleitung von ausschließlich Zugkräften erfolgt, insbesondere bei einem Triebstrang mit an einem/am Getriebegehäuse abgestützten Generator, insbesondere mittels einer zuvor weiter oben beschriebenen Zugmittelkupplung, insbesondere in einer zuvor weiter oben beschriebenen Triebstranganordnung oder allgemein in einem Industriegetriebe, insbesondere auch bei/durch Verwendung einer zuvor weiter oben beschriebenen zusätzlichen in axialer Richtung wirkenden Vorspanneinrichtung, welche ebenfalls zugmittelbasiert wirken kann. Hierdurch ergeben sich zuvor genannte Vorteile.

Gemäß einer Ausführungsform wird die Aufnahme und Weiterleitung von ausschließlich Zugkräften mittels einer Mehrzahl von Zugmitteln vorgenommen, welche jeweils sowohl an der ersten als auch an der zweiten Kupplungskomponente befestigt sind, insbesondere schlaufenartig zumindest reib- /kraftschlüssig, insbesondere jeweils in einer Ausrichtung in einer Radialebene, und welche den Drehmoment-Kraftflusspfad zwischen den Kupplungskomponenten definieren, wobei die Mehrzahl von Zugmitteln bevorzugt derart zwischen den Kupplungskomponenten zugkraftübertragend gekoppelt sind, dass sowohl in einer ersten Zugkraftrichtung, insbesondere in der durch das eingangsseitig am Triebstrang wirkende Drehmoment definierten Betriebs-/Energieerzeugungsrichtung, als auch in einer zweiten Zugkraftrichtung, insbesondere in entgegengesetzter Reversier-/Bremsbetriebsrichtung eine Vorspannkraft zwischen den Kupplungskomponenten ausgeübt wird und eine in Umfangsrichtung bidirektionale Drehmomentübertragung erfolgt. Dies kann auch eine gute/exakte relative Positionierung der Kupplungskomponenten auch unter sehr dynamischen Belastungszuständen sicherstellen, in Verbindung mit einem ruhigen Betriebsverhalten.

Die zuvor genannte Aufgabe wird auch gelöst durch Verwendung einer Zugmittelkupplung, insbesondere einer zuvor weiter oben beschriebenen Zugmittelkupplung, in einem Triebstrang oder in einem Industriegetriebe, insbesondere in einer Windenergieanlage in einer Anordnung zwischen einem/dem Rotor der Windenergieanlage und einem/dem Planetengetriebe der Windenergieanlage oder in/auf einem Prüfstand, insbesondere in einachsig fluchtender Anordnung/Ausrichtung des gesamten Triebstrangs, wobei mittels einer/der zugmittelbasierten Zug-Momentenabstützung der Zugmittelkupplung im Wesentlichen oder ausschließlich Zugkräfte zwischen zwei sich axial mittels Zapfen oder dergleichen axialer Fortsätze überlappenden Kupplungskomponenten zugmittelbasiert übertragen werden, bevorzugt mittels einer Mehrzahl von Zugmitteln jeweils in einer Ausrichtung in einer oder mehreren Radialebene(n), insbesondere zumindest kraft-/reibschlüssig, wobei bevorzugt eine die Mehrzahl von Zugmitteln derart zwischen den Kupplungskomponenten zugkraftübertragend gekoppelt sind/werden, dass sowohl in einer ersten Zugkraftrichtung, insbesondere in der durch das eingangsseitig am Triebstrang wirkende Drehmoment definierten Betriebs-/Energieerzeugungsrichtung, als auch in einer zweiten Zugkraftrichtung, insbesondere in entgegengesetzter Reversier-/Bremsbetriebsrichtung eine Vorspannkraft zwischen den Kupplungskomponenten ausgeübt wird und eine in Umfangsrichtung bidirektionale Drehmomentübertragung erfolgt. Hierdurch lassen sich zuvor genannte Vorteile realisieren, insbesondere auch in Hinblick auf Entkopplung sowie ruhiges Betriebsverhalten. Die Verwendung der hier beschriebenen Zugmittelkupplung kann dabei insbesondere auch im Zusammenhang mit einer Abstützung von/der axial aneinandergrenzenden Gehäusen erfolgen, beispielsweise einer direkten Abstützung eines Getriebegehäuses an einem (Rotor-)Lagergehäuse, beispielsweise in einem Triebstrang einer Windenergieanlage.

Zusammenfassung: Die vorliegende Erfindung betrifft eine Zugmittelkupplung zur axialen Anbindung von Wellen- oder Getriebekomponenten, aufweisend eine erste Kupplungskomponente und eine zweite Kupplungskomponente und eine Zug-Momentenabstützung umfassend wenigstens ein die erste und zweite Kupplungskomponente miteinander kuppelndes Zugmittel; die Erfindung stellt eine zwischen den Wellen- oder Getriebekomponenten wirkende Zug-Momentenabstützung bereit, welche eingerichtet ist, zumindest einem zwischen den Kupplungskomponenten um die axiale Erstreckung der Kupplungskomponenten wirkenden Drehmoment zugmittelbasiert entgegenzuwirken. Dies liefert nicht zuletzt auch eine vorteilhafte Variabilität beispielsweise hinsichtlich zahlreicher funktioneller Optionen, die vergleichsweise einfach und anwendungsspezifisch implementierbar sind. Die vorliegende Erfindung betrifft ferner ein entsprechendes zugmittelbasiertes Abstützverfahren sowie entsprechende Verwendungen.

### KURZE BESCHREIBUNG DER FIGUREN

In den nachfolgenden Zeichnungsfiguren wird die Erfindung noch näher anhand bevorzugter Ausführungsbeispiele exemplarisch beschrieben, wobei die nachfolgend dargestellten Merkmale sowohl jeweils einzeln als auch in Kombination einen Aspekt der Erfindung darstellen können, und wobei für Bezugszeichen, die nicht explizit in einer jeweiligen Zeichnungsfigur beschrieben werden, auf die anderen Zeichnungsfiguren verwiesen wird. Es zeigen insbesondere jeweils in schematischer Darstellung:
**Figur 1** in einer Seitenansicht eine Zugmittelkupplung gemäß einem Ausführungsbeispiel in einer Anordnung an einem Triebstrang beispielsweise einer Windenergieanlage, wobei zusätzlich zur Drehmomentkopplung auch eine Hangabtriebs- bzw. Kippmomentenabstützung implementiert ist;
**Figuren 2A**, **2B** in einer Seitenansicht und in einer Draufsicht jeweils Details einer Zugmittelkupplung gemäß einem Ausführungsbeispiel;
**Figuren 3A**, **3B**, **3C** jeweils in einer Draufsicht Details eines Aspektes einer Zugmittelkupplung gemäß einem weiteren Ausführungsbeispiel jeweils in vordefinierten Relativpositionen der Kupplungspartner, wobei auch eine Schaltfunktionalität in die Kupplung implementiert ist;
**Figur 4** und **Figur 5** jeweils in einer Seitenansicht eine Zugmittelkupplung gemäß weiteren Ausführungsbeispielen jeweils in einer so genannten "back-to-back"-Anordnung (Testanordnung) zweiter Triebstränge oder Getriebe gemäß einem ersten und zweiten Prüfstand;
**Figuren 6A**, **6B**, **6C** jeweils in einer Draufsicht Details eines Aspektes einer Zugmittelkupplung gemäß einem weiteren Ausführungsbeispiel, bei welchem auch eine Schaltfunktionalität implementiert ist, wobei die Zugmittelkupplung an einem Triebstrang einer Windenergieanlage vorgesehen ist;
**Figur** 7 in einer Seitenansicht einen starr gekuppelten Triebstrang gemäß dem Stand der Technik bei einer Windenergieanlage;

### DETAILLIERTE BESCHREIBUNG DER FIGUREN

Die Erfindung wird zunächst unter allgemeiner Bezugnahme auf alle Bezugsziffern und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Bereitgestellt wird eine Zugmittelkupplung 15 mit einem ersten Kupplungspartner 2.1 (insbesondere (Rotor-)Wellenflansch) und einem zweiten Kupplungspartner 16.1 (insbesondere Getriebeplanetenträger/-eingangswelle), beispielsweise in einer sich axial entlang einer Mittenlängsachse M erstreckenden Triebstranganordnung 10 zwischen einerseits einer Nabe 1 und einer Welle 2 (insbesondere Rotorwelle einer Windenergieanlage 100) und andererseits einer Getriebekomponente 16 (insbesondere mit Planetengetriebestufe). Die Kupplungspartner 2.1, 16.1 überlappen sich in axialer Richtung mit insbesondere paarweise korrespondierenden Kupplungsabschnitten, beispielsweise in Ausgestaltung als Zapfen oder Nocken 2.7 (z.B. Rotorwellenflanschzapfen) sowie als korrespondierende Zapfen oder Nocken 16.7 seitens des Getriebes. An diesen axial überlappenden Abschnitten sind drehmomentübertragende Zugmittel 18.1, 18.2 vorgesehen, insbesondere durch schlaufenartiges Umgreifen, wobei mit dem bestimmungsgemäß um die Längsachse des Triebstrangs zu übertragenden Drehmoment insbesondere ein Ausgangsdrehmoment **M2** bzw. eine Differenz aus Eingangsdrehmoment **M1** und Ausgangsdrehmoment **M2** bezeichnet wird. Die Zugmittel liegen jeweils in ersten Abstützpunkten/- bereichen P1 an der ersten Kupplungskomponente und in zweiten Abstützpunkten/-bereichen P2 an zweiter Kupplungskomponente an, insbesondere basierend auf Kraft-/Reibschluss, wahlweise ganz ohne Formschluss.

Eine/die erfindungsgemäße zugmittelbasierte Zug-Momentenabstützung 18 der Zugmittelkupplung 15 weist bevorzugt unterschiedliche Arten von Zugmitteln auf, insbesondere wenigstens zwei Typen von im Umfangsrichtung zugkraftübertragender Zugmittel: erste Zugmittel 18.1 und zweite Zugmittel 18.2 und wahlweise auch weitere insbesondere in axialer Richtung wirkende Zugmittel.

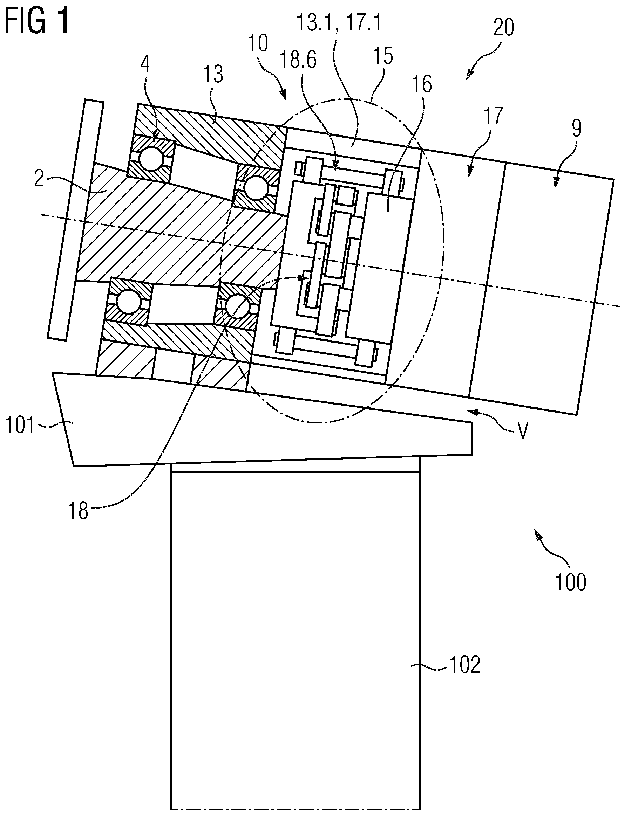

Die Welle 2 ist in einem Lager 4 (insbesondere Rotorlager/Rotorwellenlagerung, z.B. mit Pendel- oder Kegelrollenlager, Fig. 1, Fig. 7) abgestützt, welches von einem Rotorlagergehäuse (erstes Gehäuse) 13 umgrenzt ist, und das Getriebe 16 ist in einem Getriebegehäuse 17 (zweites Gehäuse) angeordnet. Die Gehäuse können mittels wenigstens einer axial übergreifenden/überlappenden Abstützstruktur 13.1, 17.1, die bevorzugt an wenigstens einem der Gehäuse radial außen angeordnet ist, gegeneinander abgestützt sein, insbesondere derart, dass unterhalb vom Getriebegehäuse (und Generator) ein Freiraum bzw, Freivolumen V gebildet ist, in welchem bevorzugt gar keine Abstützeinheiten zur Basis vorgesehen sind. Wahlweise ist direkt am Gehäuse auch ein Generator 9 vorgesehen, insbesondere frei schwebend ohne zusätzliche Abstützung nach unten. Das Getriebe 16 kann allein oder zusammen mit weiteren Getriebe-Komponenten oder weiteren Komponenten des Triebstrangs ein Industriegetriebe 20 bilden, beispielsweise ein Industriegetriebe 20 mit mehreren Getriebestufen.

An unterschiedlichen Stellen der Kupplung kann eine Kraft-/Weg-Messung implementiert sein, insbesondere mittels kombinierter Kraft-/Weg-Sensoren 19, beispielsweise im Bereich der axial überlappenden Abschnitte 2.7, 16.7 und/oder im Bereich eines Axialhubes und/oder im Bereich wenigstens einer axial wirkenden Vorspanneinrichtung.

Optional kann ein weiteres (drittes) Zugmittel bzw. ein dritter Typ Zugmittel 18.3 vorgesehen sein, welcher in axialer Richtung vorgespannt zwischen den Kupplungspartnern vorgesehen sein kann und beispielsweise im Zusammenhang mit einer Schaltfunktion bzw. zum Aufbringen einer Schaltkraft **F5** implementiert ist.

Optional kann eine axial vorgespannt zwischen den Kupplungspartnern wirkende Vorspanneinrichtung 18.6 vorgesehen sein, mittels welcher insbesondere auch einer Hangabtriebskraft F4 entgegengewirkt werden kann (Zugkraft **F3**, insbesondere axial gegen Hangabtriebskraft und/oder Kippmoment gerichtet, wobei das Kippmoment oder ein Umlaufbiegemoment zumindest teilweise auch aufgrund einer vergleichsweise großen und axial weit beabstandet angreifenden Gewichtskraft **g** hervorgerufen sein kann). Die Vorspanneinrichtung 18.6 umfasst beispielsweise mehrere axial ausgerichtete und axial vorgespannte Vorspannelemente 18.7, insbesondere jeweils in Ausgestaltung als oder umfassend ein weiteres Zugmittel, insbesondere in einer Anordnung radial außen lateral an den Kupplungspartnern. Die Vorspanneinrichtung 18.6 kann wahlweise unabhängig von einem dritten Zugmittel-Typ 18.3 implementiert werden, wahlweise kann eine Vorschalt- und Schaltfunktion jedoch auch kombiniert implementiert sein/werden. Der Fachmann kann insbesondere in Abhängigkeit von aufzubringenden Schaltkräften und etwaigen Hangabtriebskräften eine für den jeweiligen Anwendungsfall optimierte Auslegung vornehmen. Das entsprechende Vorspannelement 18.7 bzw. das entsprechende Zugmittel vom dritten Typ 18.3 kann beispielsweise an radial außen an den korrespondierenden Kupplungskomponenten vorstehenden Zapfen bzw. Kraftschlussabschnitten P3 (optional auch Formschluss) vorgesehen sein, insbesondere schlaufenartig.

Als beispielhafte Anwendungsfälle können die bereits erwähnte Windenergieanlage 100 und ein Prüfstand 200 genannt werden. Eine Abstützung erfolgt dabei im Wesentlichen oder bevorzugt auch ausschließlich über das Gehäuse 13 der Wellenlagerung und die entsprechende Schnittstelle zum Maschinenträger 101 oder dergleichen Basis; von dort können die Kräfte z.B. in den Turm 102 einer Windenergieanlage abgeleitet werden.

Die das bestimmungsgemäße Drehmoment des Triebstrangs übertragenden Zugmittel 18.1, 18.2 sind bevorzugt in einer oder zwei zugmittelspezifischen Radialebenen Er angeordnet. Bevorzugt umfassen die Zugmittel 18.1, 18.2 einen ersten Zugmitteltyp (18.1) und einen zweiten Zugmitteltyp (18.2), wobei mittels der Zugmittel des ersten Typs eine (erste) insbesondere nach oben oder in eine erste Umfangsrichtung gerichtete Zugkraft **F1** übertragen wird und mittels der Zugmittel des zweiten Typs eine (zweite) insbesondere nach unten oder in einen zweite (entgegengesetzte) Umfangsrichtung gerichtete Zugkraft **F2** übertragen wird. Die Kupplungspartner können durch diese insbesondere entgegengerichteten Kräftepaare zwischen korrespondierenden Zapfen auf in Umfangsrichtung sehr ruhige und stabile Weise gelagert bzw. gekoppelt werden.

Im Folgenden wird die Erfindung noch detaillierter unter spezifischer Bezugnahme auf die einzelnen Figuren erläutert.

In **Fig. 1** ist eine Triebstranganordnung 10 für eine Windenergieanlage 100 gezeigt, wobei die Zugmittelkupplung 15 eine Zug-Momentenabstützung 18 aufweist, welche auch mehrere axial ausgerichtete/wirkende Vorspanneinrichtungen 18.6 aufweist. Die Gehäuse 13, 17 sind mittels einer oder mehrerer Abstützstrukturen 13.1, 17.1, insbesondere in integral-einstückiger Ausgestaltung, miteinander verbunden. Die Abstützstruktur 13.1, 17.1 ist statisch angeordnet, rotiert also nicht mit, und kann insofern auch hinsichtlich Zug- oder Druckkraftrichtungen optimiert ausgelegt sein/werden. Insbesondere im unteren Umfangsbereich ist die Abstützstruktur 13.1, 17.1 bevorzugt hinsichtlich Druckkräften optimiert, beispielsweise auch zur Kompensation von aus Kippmomenten **M3** resultierenden Druckkräften (bzw. allgemein zur Kompensation von Kippmomenten, Gewichtskraftmomenten, Hangabtriebsmomenten, Umlaufbiegemomenten **M3**). Eine Vorspanneinrichtung 18.6 begünstigt die Kompensation von Hangabtriebskräften auch im Bereich der rotierenden Komponenten, beispielsweise auch bei sehr stark geneigten oder sogar senkrecht ausgerichteten Triebsträngen.

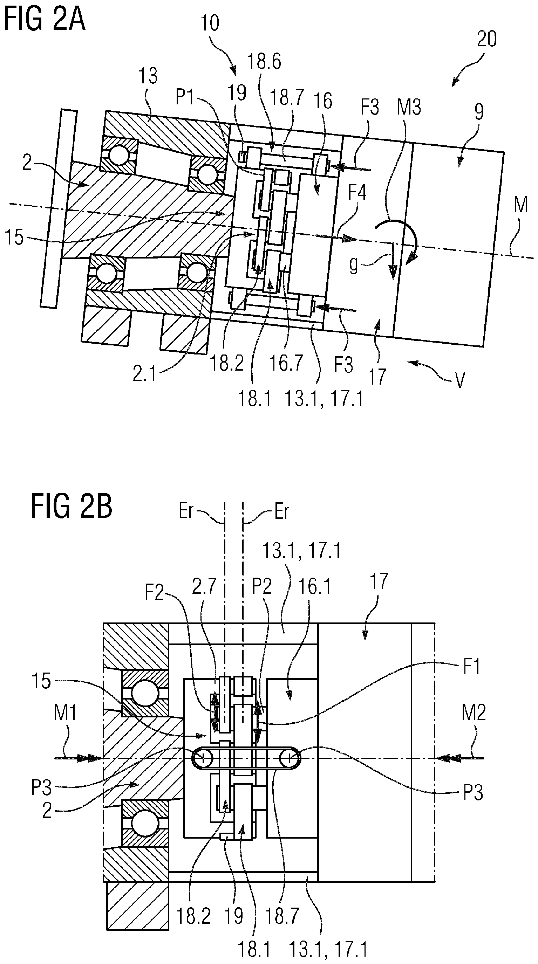

In den **Fig. 2** ist im Einzelnen für einen geneigt ausgerichteten Triebstrang (beispielsweise einer Windenergieanlage) die Wirkungsrichtung des jeweiligen Zugmittels 18.1, 18.2, 18.7 dargestellt.

In **Fig. 2A** sind die gegen die Hangabtriebskraft **F4** wirkenden axialen Zugkräfte **F3** dargestellt, und in **Fig. 2B** sind die entgegengesetzt im Wesentlichen in Umfangsrichtung wirkenden Zugkräfte **F1**, **F2** dargestellt.

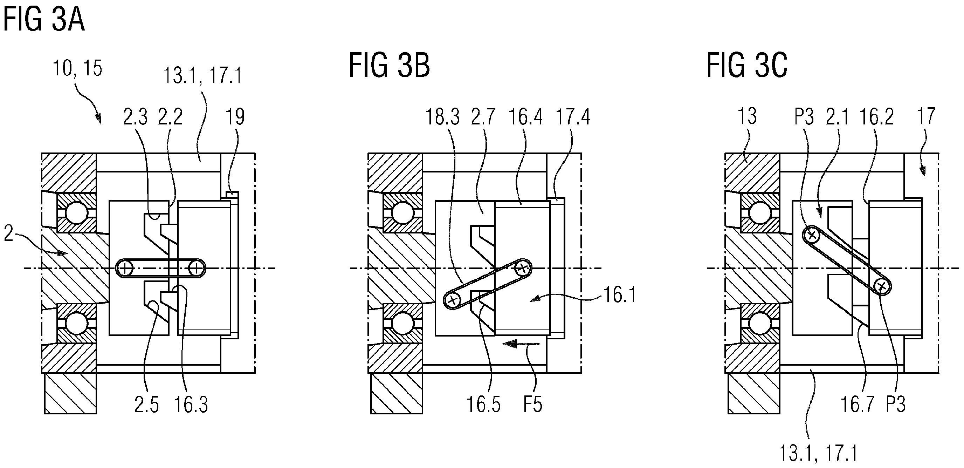

In den **Fig. 3** ist eine optional zusätzlich implementierbare zugmittelbasierte Schaltfunktionalität dargestellt, basierend auf einer axialen Lagetoleranz wenigstens eines der Kupplungspartner, wobei die Kupplungspartner in der einen Umfangsrichtung axialkraftfrei kuppeln (also ohne axiale Reaktionskraft) und in der entgegengesetzten Umfangsrichtung unter formbegründeter Axiallast kuppeln: beide Kupplungspartner weisen einen stirnseitigen Anschlag 2.2, 16.2 auf, und beide Kupplungspartner weisen korrespondierende axialparallele Kupplungsabschnitte 2.3, 16.3 und schräg im Winkel zur axialen Ausrichtung verlaufende Kupplungsabschnitte 2.5, 16.5 auf, insbesondere an mehreren Umfangspositionen im Bereich von Zapfen oder dergleichen axial vorstehender Abschnitte. Im gezeigten Beispiel ist die axiale Lagetoleranz durch den zweiten Kupplungspartner sichergestellt, nämlich indem sowohl am Getriebekupplungspartner als auch im Getriebegehäuse korrespondierende axialparallele Führungsabschnitte 16.4, 17.4 vorgesehen sind. die vom Zugmittel 18.3 bzw. der entsprechenden Vorspanneinrichtung ausgeübte axiale Schaltkraft **F5** wirkt zwischen den Befestigungspunkten P3 und führt dazu, dass die Kupplungspartner in einer der Umfangsrichtungen loskuppeln können, insbesondere in der Art eines Überlastschutzes. Je nach detaillierter konstruktiver Ausgestaltung kann das Zugmittel 18.3 dabei auch eine Sollbruchstelle bilden.

In **Fig. 3A** ist eine Anordnung ohne Drehmomentübertragung gezeigt. In **Fig. 3B** ist eine Drehmomentübertragung gemäß bestimmungsgemäßem Gebrauch in der vorgesehenen Umfangsrichtung gezeigt. An den korrespondierenden axialparallelen Kupplungsabschnitten 2.3, 16.3 wird keine gegen die Kraft **F5** gerichtete Reaktionskraft generiert. In **Fig. 3C** ist eine Situation mit Richtungsumkehr gezeigt; das zu übertragende Drehmoment ist in diesem gezeigten Moment jedoch so groß, dass die Kupplungspartner entlang der schräg im Winkel zur axialen Ausrichtung verlaufenden Kupplungsabschnitte 2.5, 16.5 axial auseinandergetrieben, und in der gezeigten Konfiguration ist der Moment des kompletten Entkuppelns auch als Moment für den Sollbruch des/der Zugmittel 18.3 veranschaulicht. Insofern liefert diese Formgebung der aneinander anliegenden Kupplungsabschnitte eine richtungsabhängige Schaltfunktionalität bzw. einen Überlastschutz, bei welcher sich aufgrund der Drehbewegung der Welle (bzw. aufgrund des zu übertragenden Drehmoments und einer Elastizität der ersten und zweiten Zugmitteltypen) der Abstand der in Umfangsrichtung mit Zugmitteln verbundenen Zapfen vergrößert, so dass die beiden Kupplungskomponenten im Zusammenhang mit einer Nachgiebigkeit in Umfangsrichtung axial näher zusammengeführt werden, insbesondere bis hin zu den axialparallelen Abschnitten 2.3, 16.3. Die daraus resultierende axiale Vorspannung kann dafür genutzt werden, ein höheres Drehmoment aufgrund höherer Reibkräfte bei Reibschluss zu übertragen oder die entstehende Axialbewegung zu nutzen, um einen Formschluss in Rotationsrichtung zu erzeugen. Insofern besteht das Konzept auch darin, an mechanischen Gegenstücken entsprechend geformte Kontaktflächen bereitzustellen. Die Zugmittelsteifigkeit kann dabei z.B. so gewählt werden, dass eine initiale Anpresskraft für den Kraftschluss sorgt, aber bei Überlast das jeweilige Zugmittel bersten darf (Fig. 3C) und damit kein überhöhtes Drehmoment mehr übertragen wird und die gekoppelten Wellen unabhängig voneinander drehen, also entkoppelt werden können.

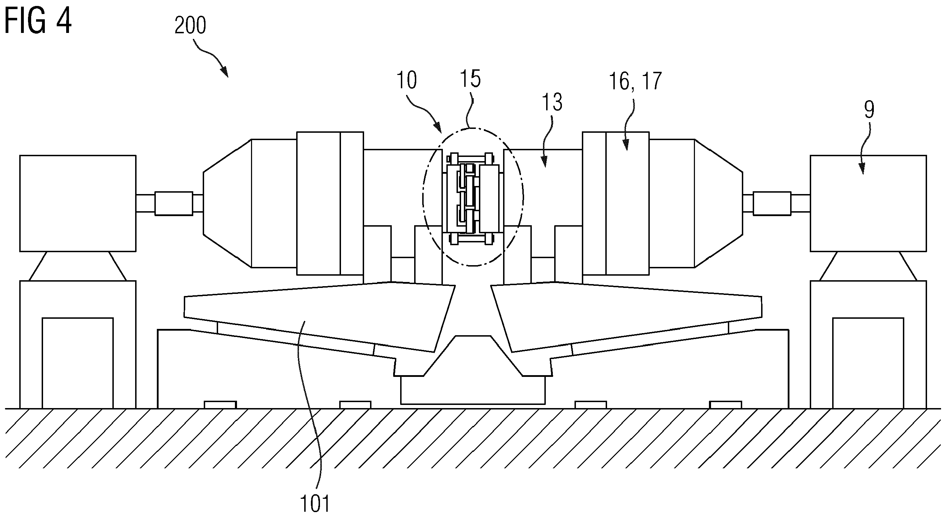

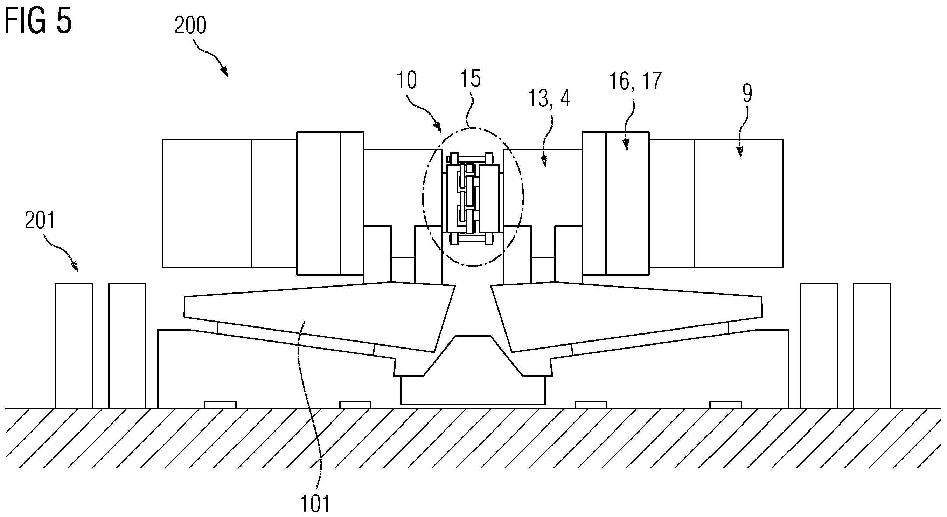

In **Fig. 4** und Fig. 5 ist jeweils eine Verwendung der hier beschriebenen Zugmittelkupplung in einem Triebstrang in/auf einem Prüfstand 200 gezeigt (wahlweise mit Umrichter 201), wobei wahlweise mit Generatoren eines vordefinierten Triebstrangs (z.B. einer Windenergieanlage) oder mit Motoren des Prüfstandes gearbeitet werden kann.

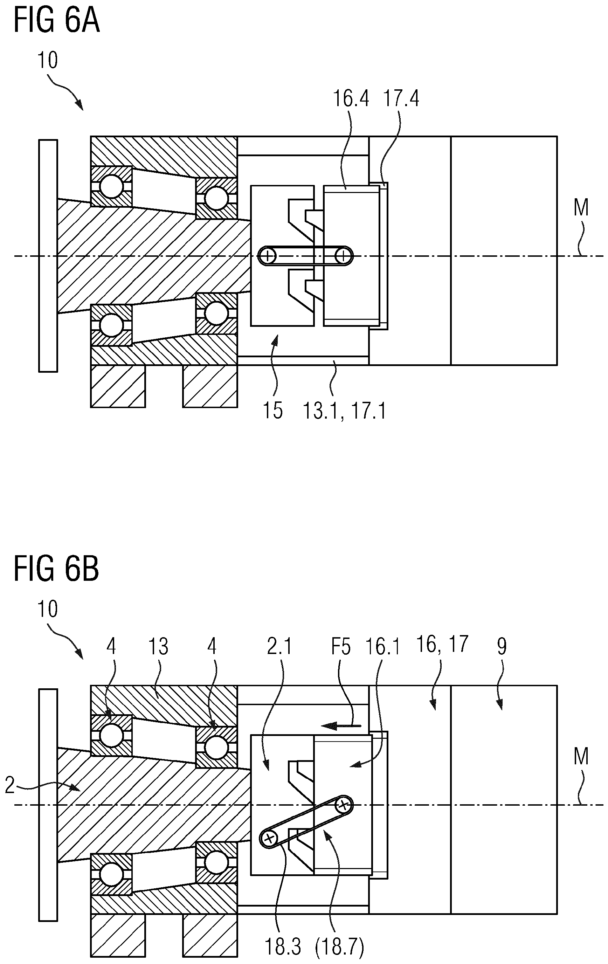

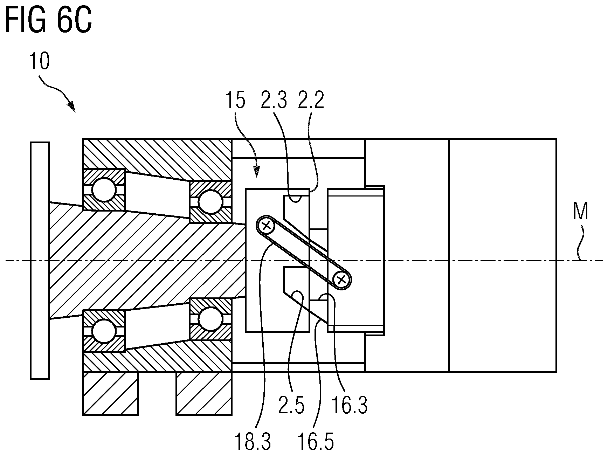

In den **Fig. 6** ist eine Ausgestaltung der Zugmittelkupplung 15 mit integrierter Schaltfunktionalität speziell am Beispiel einer Triebstranganordnung mit gegen-/aneinander abgestützten Gehäusen und am Getriebegehäuse angeflanschtem Generator gezeigt. In den **Fig. 6A** und **Fig. 6B** und **Fig. 6C** sind analog zu den Figuren **3A**, **3B**, **3C** die zuvor beschriebenen drei unterschiedlichen Betriebszustände dargestellt.

Mittels des dargestellten Zugmittels 18.3 (oder alternativ bzw. ergänzend einer zusätzlichen Vorspanneinrichtung) kann dabei auch eine Hangabtriebskraft übertragen werden, je nach weiterer Ausgestaltung und räumlicher Ausrichtung des Triebstrangs. Wahlweise sind für diesen Zweck zusätzliche axiale Vorspannelemente vorgesehen.

In **Fig. 7** ist ein Triebstrang gemäß dem Stand der Technik gezeigt, wobei die verwendete Kupplung 5 keine Zugmittel aufweist und weitgehend starr ausgestaltet ist. Die Welle 2 ist in einer (Rotor-)Wellenlagerung 4 gelagert und über ein Rotorlagergehäuse 3 auf der Basis 101 abgestützt. Die Kupplung 5 kuppelt eine in einem Getriebegehäuse 7 vorgesehene Getriebekomponente, wobei das Getriebegehäuse und ein daran angeflanschter Generator 9 mittels einer Drehmomentstützeinheit 8 bzw. Gewichtskraftabstützung nach unten zur Basis 101 abgestützt sind. Die beiden Gehäuse 3, 7 sind nicht miteinander verbunden, zumindest nicht zur struktursteifen Abstützung aneinander. Bei einer derartigen Konfiguration ergeben sich jedoch nachteilige Spannungen und Belastungen insbesondere auch bei hohen Kipp- und Umlaufbiegemomenten, insbesondere in Triebsträngen von Windenergieanlagen.

### Bezugszeichenliste

- 1: Nabe
- 2: Welle, insbesondere Rotorwelle einer Windenergieanlage
- 2.1: erste Kupplungskomponente, insbesondere (Rotor-)Wellenflansch
- 2.2: stirnseitiger Anschlag
- 2.3: axialparalleler Kupplungsabschnitt
- 2.5: schräg im Winkel zur axialen Ausrichtung verlaufender Kupplungsabschnitt
- 2.7: Zapfen/Nocke an/von erster Kupplungskomponente (z.B. Rotorwellenflanschzapfen)
- 3: Rotorlagergehäuse gemäß dem Stand der Technik
- 4: Rotorlager/Rotorwellenlagerung, insbesondere mit Pendel- oder Kegelrollenlager
- 5: Kupplung gemäß dem Stand der Technik (insbesondere weitgehend starr)
- 7: Getriebegehäuse gemäß dem Stand der Technik
- 8: Drehmomentstützeinheit bzw. Gewichtskraftabstützung gemäß dem Stand der Technik
- 9: Generator (oder Motor z.B. eines Prüfstandes)
- 10: Triebstranganordnung
- 13: Rotorlagergehäuse (erstes Gehäuse)
- 13.1: axial übergreifende/überlappende Abstützstruktur, radial außen liegend
- 15: Zugmittelkupplung
- 16: Getriebekomponente, insbesondere mit Planetengetriebestufe
- 16.1: zweite Kupplungskomponente, insbesondere Getriebeplanetenträger/-eingangswelle
- 16.2: stirnseitiger Anschlag
- 16.3: axialparalleler Kupplungsabschnitt
- 16.4: axialparalleler Führungsabschnitt
- 16.5: schräg im Winkel zur axialen Ausrichtung verlaufender Kupplungsabschnitt
- 16.7: Zapfen/Nocke an/von zweiter Kupplungskomponente
- 17: Getriebegehäuse (zweites Gehäuse)
- 17.1: axial übergreifende/überlappende Abstützstruktur, radial außen liegend
- 17.4: axialparalleler Führungsabschnitt
- 18: Zug-Momentenabstützung (zugmittelbasiert)
- 18.1: (erstes) Zugmittel bzw. erster Typ Zugmittel
- 18.2: weiteres (zweites) Zugmittel bzw. zweiter Typ Zugmittel
- 18.3: optional weiteres (drittes) Zugmittel bzw. dritter Typ Zugmittel
- 18.6: Vorspanneinrichtung
- 18.7: Vorspannelement, insbesondere weiteres Zugmittel
- 19: Kraft-/Weg-Sensor, insbesondere zumindest Weg-Sensor
- 20: Industriegetriebe
- 100: Windenergieanlage
- 101: Maschinenträger oder dergleichen Basis
- 102: Turm
- 200: Prüfstand
- 201: Umrichter
- **E**r: zugmittelspezifische Radialebene
- **F1**: (erste) insbesondere nach oben oder in erste Umfangsrichtung gerichtete Zugkraft
- **F2**: (zweite) insbesondere nach unten oder in zweite Umfangsrichtung gerichtete Zugkraft
- **F3**: (dritte) insbesondere axial gegen Hangabtriebskraft und/oder Kippmoment gerichtete Zugkraft
- **F4**: (vierte) insbesondere axial im Schwerpunkt angreifende Hangabtriebskraft
- **F5**: (fünfte) insbesondere axial auf wenigstens eine Kupplungskomponente wirkende Schaltkraft
- **g**: Gewichtskraft
- M: Mittenlängsachse des Triebstrangs
- **M1**: Eingangsdrehmoment
- **M2**: Ausgangsdrehmoment
- **M3**: Kippmoment, Gewichtskraftmoment, Hangabtriebsmoment
- P1: erster Abstützpunkt/-bereich an erster Kupplungskomponente (insbesondere radialer Zapfen)
- P2: zweiter Abstützpunkt/-bereich an zweiter Kupplungskomponente (insbesondere Zapfen radial)
- P3: Kraftschlussabschnitt (optional auch Formschluss) für Zugmittel an Kupplungskomponente
- V: Freiraum, Freivolumen

## Patentansprüche

1. Zugmittelkupplung zur axialen, insbesondere axial fluchtenden Anbindung einer Getriebekomponente an eine Welle, beispielsweise an eine mit einem Rotor gekuppelte Welle in einem Triebstrang einer Windenergieanlage, oder zum axialen Kuppeln von zwei Wellen oder Triebsträngen z.B. auf einem Prüfstand, wobei die Zugmittelkupplung aufweist:
- eine erste Kupplungskomponente, insbesondere seitens eines/des Rotors bzw. seitens einer/der Welle;
- eine zweite Kupplungskomponente, insbesondere seitens einer/der Getriebekomponente;
- eine Zug-Momentenabstützung (18) umfassend wenigstens ein die erste und zweite Kupplungskomponente miteinander kuppelndes Zugmittel (18.1), wobei die Zug-Momentenabstützung eingerichtet ist, zumindest einem zwischen den Kupplungskomponenten um die axiale Erstreckung der Kupplungskomponenten wirkenden Drehmoment (M1, M2) zugmittelbasiert entgegenzuwirken.

2. Zugmittelkupplung nach Anspruch 1, wobei die Zug-Momentenabstützung (18) zur Weiterleitung der auf die Kupplungskomponenten ausgeübten (Reaktions-)Kräfte (F1, F2) mittels des wenigstens einen kuppelnden Zugmittels einerseits an der ersten Kupplungskomponente und andererseits an der zweiten Kupplungskomponente und einer/der entsprechend rotierenden Getriebekomponente abgestützt ist, insbesondere in beiden Umfangsrichtungen und wahlweise auch zumindest anteilig auch in radialer Richtung.

3. Zugmittelkupplung nach einem der vorhergehenden Ansprüche **dadurch gekennzeichnet, dass** die Zug-Momentenabstützung (18) eine Mehrzahl von Zugmitteln umfasst, welche zwischen Zapfen oder dergleichen hervorgestehenden Abschnitten der ersten Kupplungskomponente und zwischen Zapfen oder dergleichen hervorgestehenden Abschnitten der zweiten Kupplungskomponente vorgesehen sind, insbesondere schlaufenartig zwischen jeweils paarweise korrespondierenden Zapfen der ersten und zweiten Kupplungskomponente, insbesondere jeweils in Ausgestaltung als vollständig umlaufendes Endlos-Zugmittel, insbesondere mit dem jeweiligen Zapfen in Anbindung an wenigstens zwei Zugmittel in wenigstens zwei unterschiedlichen Richtungen.

4. Zugmittelkupplung nach einem der vorhergehenden Ansprüche **dadurch gekennzeichnet, dass** die Zug-Momentenabstützung (18) eine Mehrzahl von Zugmitteln umfasst, welche sich zumindest annähernd sowohl in einer ersten Zugmittelrichtung, insbesondere in der durch das eingangsseitig am Triebstrang wirkende Drehmoment definierten Betriebs-/Energieerzeugungsrichtung, als auch in einer zweiten Zugmittelrichtung, insbesondere in Reversier-/Bremsbetriebsrichtung erstrecken.

5. Zugmittelkupplung nach einem der vorhergehenden Ansprüche **dadurch gekennzeichnet, dass** die erste und zweite Kupplungskomponente in der Art einer Klauenkupplung ineinandergreifen, insbesondere mittels axial überlappender Zapfen oder dergleichen axial hervorstehender Abschnitte, an welchen die jeweiligen Zugmittel angreifen; und/oder wobei die Weiterleitung der auf die Zug-Momentenabstützung (18) um die Welle bzw. um die axiale Richtung ausgeübten Drehmomente und daraus entsprechend resultierender Reaktionskräfte ausschließlich zugmittelbasiert ist.

6. Zugmittelkupplung nach einem der vorhergehenden Ansprüche **dadurch gekennzeichnet, dass** die Zug-Momentenabstützung ferner wenigstens eine Vorspanneinrichtung eingerichtet und angeordnet zum Aufbringen und Übertragen einer einem schwerkraftbegründeten Hangabtriebs- oder Kippmoment entgegenwirkender Aufrichtkraft zwischen den ersten und zweiten Kupplungskomponenten aufweist, insbesondere in einer Anordnung zwischen Außenmantelflächen der ersten und zweiten Kupplungskomponente; und/oder wobei die Zug-Momentenabstützung eine/die wenigstens Vorspanneinrichtung aufweist, welche funktional von der Wirkung des wenigstens einen Zugmittels entkoppelt ist, insbesondere indem die Vorspanneinrichtung im Wesentlichen in axialer Richtung zwischen den Kupplungskomponenten wirkt und das oder die Zugmittel im Wesentlichen nur in Umfangsrichtung und wahlweise auch in Radialrichtung zwischen den Kupplungskomponenten wirkt/wirken; und/oder wobei die Zug-Momentenabstützung eine/die wenigstens Vorspanneinrichtung umfassend wenigstens ein weiteres Zugmittel (18.3) in im Wesentlichen axialer Ausrichtung aufweist; und/oder wobei die Vorspanneinrichtung in einem oberen Umfangssegment an der ersten und zweiten Kupplungskomponente angreift und die Aufrichtkraft überträgt.

7. Zugmittelkupplung nach einem der vorhergehenden Ansprüche **dadurch gekennzeichnet, dass** die Zugmittelkupplung eingerichtet ist zur Übertragung einer drehmomentabhängigen Anpresskraft zwischen den Kupplungskomponenten, insbesondere mittels wenigstens einer in axialer Richtung zwischen den Kupplungskomponenten vorgespannten/vorspannbaren Vorspanneinrichtung, insbesondere mittels mehrerer über den Umfang verteilter Vorspanneinrichtungen; und/oder wobei die Zugmittelkupplung eine richtungsabhängige Schaltfunktionalität umfasst, welche durch in entgegengesetzten Umfangsrichtungen unterschiedliche Formgebung von Kontaktflächen der Kupplungskomponenten definiert ist, insbesondere mittels axialparalleler Kupplungsabschnitte und schräg im Winkel zur axialen Ausrichtung verlaufender Kupplungsabschnitte.

8. Zugmittelkupplung nach einem der vorhergehenden Ansprüche **dadurch gekennzeichnet, dass** das wenigstens eine Zugmittel riemen-, band- oder seilartig ausgestaltet ist, beispielsweise als Keil- oder Zahnriemen oder Flachriemen; und/oder wobei das wenigstens eine Zugmittel zumindest kraft-/reibschlüssig und wahlweise auch formschlüssig an einer/der Mantelfläche von Zapfen oder dergleichen hervorstehenden Abschnitten der ersten und zweiten Kupplungskomponente zur Anlage kommt; und/oder wobei mittels des wenigstens einen Zugmittels eine Schwingungsentkopplung zwischen erster und zweiter Kupplungskomponente sichergestellt ist.

9. Triebstranganordnung (10) mit einer Zugmittelkupplung nach einem der vorhergehenden Ansprüche, eingerichtet für Industriegetriebe, insbesondere eingerichtet zur Anbindung eines Rotors einer Windenergieanlage, aufweisend: ein erstes Gehäuse (13), welches eine Lagerung (14) für eine Welle (2) des Triebstrangs umgibt, und eine/die insbesondere axial fluchtend an die Welle gekuppelte/gekoppelte Getriebekomponente, welche von einem zweiten Gehäuse umgeben ist, und eine/die Zug-Momentenabstützung (18) umfassend das wenigstens eine Zugmittel (18.1); wobei die Zug-Momentenabstützung (18) ausschließlich an den gekuppelten rotierenden Komponenten abgestützt ist.

10. Triebstranganordnung (10) nach dem vorhergehende Anspruch **dadurch gekennzeichnet, dass** unterhalb des zweiten Gehäuses und wahlweise auch unterhalb eines/des an das zweite Gehäuse gekuppelten Generators ein Freiraum vorgesehen ist, über welchem das zweite Gehäuse und gegebenenfalls auch ein/der daran gekuppelte Generator abstützfrei über einem/dem Maschinenträger frei im Raum angeordnet sind, insbesondere mit Bewegungsfreiheitsgrad zumindest nach unten.

11. Industriegetriebe (10), insbesondere zum Abstützen von seitens einer Getriebekomponente um eine axial ausgerichtete Welle wirkenden Drehmomenten ausschließlich mittels wenigstens eines zwischen rotierender Welle und rotierender Getriebekomponente kuppelnden Zugmittels, mit einer Triebstranganordnung (10) nach einem der vorhergehenden Ansprüche oder mit einer Zugmittelkupplung nach einem der Ansprüche 1 bis 8.

12. Verfahren zum Einstellen einer Drehmomentübertragung in einer Triebstranganordnung (10) beispielsweise eines Industriegetriebes, wobei mittels einer Zugmittelkupplung (15) eine erste Kupplungskomponente, insbesondere eine Welle (2) des Triebstrangs, an eine zweite Kupplungskomponente, insbesondere an eine Planetengetriebekomponente drehmomentübertragend gekuppelt ist/wird, wobei mittels einer Zug-Momentenabstützung (18), welche einem auf die Kupplungskomponenten um deren axiale Erstreckung wirkenden Drehmoment (M1, M2) entgegenwirkt, eine/die Drehmomentübertragung zwischen den Kupplungskomponenten zugmittelbasiert durch Aufnahme und Weiterleitung von ausschließlich Zugkräften erfolgt, insbesondere bei einem Triebstrang mit an einem/am Getriebegehäuse (17) abgestützten Generator (9), insbesondere mittels einer Zugmittelkupplung nach einem der Ansprüche 1 bis 8, insbesondere in einer Triebstranganordnung (10) nach Anspruch 9 oder in einem Industriegetriebe (20).

13. Verfahren nach dem vorhergehenden Verfahrensanspruch, wobei die Aufnahme und Weiterleitung von ausschließlich Zugkräften mittels einer Mehrzahl von Zugmitteln (18.1, 18.2) erfolgt, welche jeweils sowohl an der ersten als auch an der zweiten Kupplungskomponente befestigt sind, insbesondere schlaufenartig zumindest reib- /kraftschlüssig, insbesondere jeweils in einer Ausrichtung in einer Radialebene, und welche den Drehmoment-Kraftflusspfad zwischen den Kupplungskomponenten definieren, wobei die Mehrzahl von Zugmitteln bevorzugt derart zwischen den Kupplungskomponenten zugkraftübertragend gekoppelt sind, dass sowohl in einer ersten Zugkraftrichtung, insbesondere in der durch das eingangsseitig am Triebstrang wirkende Drehmoment definierten Betriebs-/Energieerzeugungsrichtung, als auch in einer zweiten Zugkraftrichtung, insbesondere in entgegengesetzter Reversier-/Bremsbetriebsrichtung eine Vorspannkraft zwischen den Kupplungskomponenten ausgeübt wird und eine in Umfangsrichtung bidirektionale Drehmomentübertragung erfolgt.

14. Verwendung einer Zugmittelkupplung (10) insbesondere nach einem der Ansprüche 1 bis 8 in einem Triebstrang oder in einem Industriegetriebe (20), insbesondere in einer Windenergieanlage (100) in einer Anordnung zwischen einem/dem Rotor der Windenergieanlage (100) und einem/dem Planetengetriebe der Windenergieanlage oder in/auf einem Prüfstand, insbesondere in einachsig fluchtender Anordnung/Ausrichtung des gesamten Triebstrangs, wobei mittels einer/der zugmittelbasierten Zug-Momentenabstützung (18) der Zugmittelkupplung (10) im Wesentlichen oder ausschließlich Zugkräfte zwischen zwei sich axial mittels Zapfen oder dergleichen axialer Fortsätze überlappenden Kupplungskomponenten zugmittelbasiert übertragen werden, bevorzugt mittels einer Mehrzahl von Zugmitteln jeweils in einer Ausrichtung in einer oder mehreren Radialebene(n), insbesondere zumindest kraft-/reibschlüssig, wobei bevorzugt eine die Mehrzahl von Zugmitteln derart zwischen den Kupplungskomponenten zugkraftübertragend gekoppelt sind/werden, dass sowohl in einer ersten Zugkraftrichtung, insbesondere in der durch das eingangsseitig am Triebstrang wirkende Drehmoment definierten Betriebs-/Energieerzeugungsrichtung, als auch in einer zweiten Zugkraftrichtung, insbesondere in entgegengesetzter Reversier-/Bremsbetriebsrichtung eine Vorspannkraft zwischen den Kupplungskomponenten ausgeübt wird und eine in Umfangsrichtung bidirektionale Drehmomentübertragung erfolgt.

15. Verwendung eines Industriegetriebes nach Anspruch 11 oder einer Zugmittelkupplung nach einem der Ansprüche 1 bis 8 in einer Windenergieanlage oder auf einem Prüfstand.
